# FASCICULE DE BREVET EUROPEEN

(11) **EP 0 353 170 B1**
(45) Date de publication et mention de la délivrance du brevet: **06.10.1993**
(21) Numéro de dépôt: 89420277.9
(22) Date de dépôt: 26.07.1989
(51) Int. Cl.: G21C 21/18

(54) **Procédé de fabrication d'un élément métallique absorbeur de neutrons et élément obtenu**
Verfahren zur Erzeugung eines metallischen Neutronenabsorberelements und so erhaltenes Element
Method of producing a metallic neutron absorber element, and element obtained

(30) Priorité: 28.07.1988 FR 8810449
(43) Date de publication de la demande: 31.01.1990
(73) Titulaire: CEZUS Compagnie Européenne du Zirconium, F-92400 Courbevoie (FR)
(72) Inventeur: Boutin, Jean, F-38400 Saint-Martin d'Heres (FR); Lamaze, Airy-Pierre, F-38000 Grenoble (FR); Moulin, Luc, F-75008 Paris (FR)
(74) Mandataire: Séraphin, Léon

(56) Documents cités:
- DE-A- 3 437 112
- FR-A- 1 227 586
- FR-A- 1 503 207

## Description

La présente invention concerne un procédé de fabrication d'un élément absorbeur de neutrons, utilisable par exemple comme constituant d'une barre de contrôle de réacteur nucléaire à eau, ainsi que l'élément absorbeur de neutrons obtenu.

L'article "Development of Zircaloy Clad Hafnium Rods for BWR Long Life Neutron Absorbers", de R. KUWAE-M.OBATA-K.SATO-S.SHIMA- J. of Nuclear Science and Technology, 23(2), pp.185-187 (Feb.1986), décrit la fabrication de barres de hafnium gainées de zircaloy pour remplacer des absorbeurs de neutrons à base de carbure de bore, et rappelle que Hf est un absorbeur de neutrons plus durable que le carbure de bore.

La fabrication d'une barre en Hf, commençant par une fusion sous vide et se poursuivant par des corroyage à chaud et éventuellement à froid, avec des traitements thermiques, est un processus complexe, et le gainage d'une telle barre par du zircaloy 2, décrit par l'article précédent, est également compliqué et coûteux.

Il en est de même quand on utilise un alliage à base de hafnium tel que décrit dans FR-A-1503207 et comportant comme éléments d'addition principaux 5 à 30% en masse de Zr et/ou 15 à 30% en masse de Nb agissant comme stabilisateurs de la phase β du Hafnium et visant à améliorer les propriétés mécaniques des barres.

La demanderesse a cherché à mettre au point un élément absorbeur à base de hafnium plus simple à fabriquer et plus économique.

### EXPOSE DE L'INVENTION

L'invention a pour premier objet un procédé de fabrication d'un élément métallique absorbeur de neutrons pour utilisation dans un dispositif de contrôle d'un réacteur nucléaire, ledit élément comprenant du hafnium et étant revêtu d'un gainage peu ou pas absorbant pour lesdits neutrons. Selon l'invention, ce procédé comprend les opérations suivantes :
a) on prépare des produits métalliques comprenant (% en masse), par nature d'élément ou alliage :
   Hf : au moins 25%
   Zr et/ou alliage de Zr : 0 à 75%
   Ti et/ou alliage de Ti : 0 à 75%
   alliages Hf-Zr de teneur en Zr < 55% : 0 à 75%
   alliages Hf-Ti de teneur en Ti < 55% : 0 à 75%
   . éléments métalliques absorbants pour les neutrons et fondant à plus de 400°C : < 0,2% et de préférence < 0,1%
   . autres éléments métalliques fondant à plus de 400°C: 0 à le solde, ce solde étant inférieur à 5% ;
b) on introduit une partie au moins de ces produits dans un récipient métallique ayant une extrémité ouverte ;
c) on comprime lesdits produits dans ce récipient, ou on les a comprimés avant leur introduction dans le récipient ;
d) on répète si nécessaire les introductions et compressions desdits produits jusqu 'à remplir le récipient à au moins 95%, en obtenant une densité apparente des produits comprimés supérieure à 80% de la densité à l'état massif ;
e) on ferme l'extrémité ouverte du récipient par soudage d'un couvercle ou d'un bouchon métallique en assurant un vide intérieur d'air meilleur que 1,3pa (= 10⁻² mm de mercure), par une méthode telle que bombardement d'électrons, soudage laser, soudage à l'arc sous argon avec scellage après mise sous vide ou sous gaz neutre tel que l'hélium de l'intérieur du récipient.

Les éléments absorbeurs de l'invention sont ainsi entièrement métalliques, les produits métalliques compactables comprenant notamment des cristaux et/ou des copeaux et/ou de l'éponge, le terme "cristaux" désignant ici les dépôts métalliques d'électrolyse, le terme "copeaux" désignant les fragments métalliques résultant d'opérations d'usinage telles que le tournage, le fraisage, le perçage ainsi qu'éventuellement de petites chutes de volume unitaire en général inférieur à 1cm³, et le terme "éponge" désignant les produits issus d'une réduction par Mg ou réduction Kroll dans le cas de Hf, Zr et Ti.
Le hafnium utilisé comprend de préférence des cristaux d'électrolyse représentant au moins 25% de la masse totale des produits et ayant des teneurs moyennes en H et en Cl respectivement inférieures à 40ppm et à 50ppm.
Les produits utilisés peuvent comprendre par ailleurs, éventuellement en plus des cristaux d'électrolyse en Hf, des cristaux d'électrolyse en Zr et/ou Ti, ayant aussi des teneurs en H et Cl respectivement inférieures à 40ppm et 50ppm.
Les cristaux d'électrolyse en Hf méritent une attention particulière puisqu' ils constituent de préférence la totalité ou une partie notable de la charge correspondant à l'intérieur de l'élément absorbeur de neutrons de l'invention. De façon typique, ces cristaux ont une masse volumique apparente allant de 2 à 6 g/cm³ et, individuellement, une taille variable allant de 0,1 mm à 3 ou 4 mm, avec un aspect massif ou aiguillé selon les conditions d'électrolyse. Ils sont souvent groupés en agrégats, correspondant à la croissance simultanée des dendrites ou aiguilles selon plusieurs axes cristallographiques, la taille de ces agrégats allant alors typiquement de 3 mm à 2 cm. Les agrégats les plus grands sont soit éliminés pour cette utilisation, soit fragmentés par exemple par broyage pour revenir à une taille inférieure, typiquement moins de 0,5 à 0,3 fois le diamètre ou l'épaisseur du produit compacté à obtenir.

A la sortie de l'électrolyse, qui a typiquement eu lieu dans un bain de chlorures fondus, les cristaux d'électrolyse en Hf sont le plus souvent lavés et séchés. Leurs teneurs en H et Cl à ce stade, habituellement inférieures à respectivement 40 et 50 ppm, peuvent être abaissées à moins de 25 à 30 ppm, grâce à un réglage soigné des conditions d'électrolyse, éventuellement complété par un séchage plus poussé que le séchage à l'ambiante : entre 150 et 300°C sous vide meilleur que 1,3Pa ou sous gaz inerte.
On peut aller encore plus loin dans la purification en H et Cl, en soumettant les cristaux d'électrolyse, non pas à ce traitement entre 150 et 300°C, mais à un traitement de 8h à 48h entre 1000 et 1250°C et typiquement de 16h à 32h entre 1050 et 1150°C, sous vide meilleur que 1 mPa. On obtient alors des teneurs résiduelles en H et Cl respectivement inférieures à 20 ppm et 10 ppm.

Lorsqu'on utilise également des cristaux d'électrolyse en Zr et/ou en Ti, les mêmes traitements peuvent être appliqués séparément ou simultanément. Selon la densité linéaire en Hf désirée et selon le poids d'élément désiré, en fonction aussi des possibilités d'approvisionnement, divers métaux purs et alliages peuvent être choisis pour former la charge. On peut ainsi aller de 25 à 100% Hf pour l'intérieur de l'élément, et par exemple alléger au maximum l'élément avec des cristaux ou copeaux de Ti ou alliage.

La compression, à laquelle se prêtent bien en particulier les cristaux d'électrolyse en Hf, notamment par suite de leur proportion de vides élevée traduite par une masse volumique apparente faible, peut être faite à deux stades :
- soit avant l'introduction dans le récipient de gainage, les produits compactables, dont le mélange a s'il y a lieu été homogénéisé, étant comprimés par exemple sous forme de comprimés ou pastilles ("pellets") rentrant dans le récipient avec un jeu faible, typiquement moins de 0,5 mm au diamètre ;
- soit après introduction, en général en plusieurs fois, dans le récipient, les compressions avec un outil rentrant dans le récipient, de préférence avec un jeu réduit, étant faites en général en au moins deux fois.

Lorsqu'on part de tels comprimés ou "pellets", le ou les "pellets" introduits dans le récipient peuvent être recomprimés.
Le remplissage du récipient et la compression sont habituellement réglés de façon que la mise en place du bouchon ou couvercle à souder sur le récipient laisse une hauteur intérieure libre inférieure à 3mm, et de préférence inférieure à 1mm. La densité apparente des produits comprimés est supérieure à 80% de leur densité moyenne à l'état massif et typiquement comprise entre 85 et 95% de cette densité.

De façon habituelle, on mélange les produits avant de les comprimer ou de les introduire dans ledit récipient métallique, de façon à obtenir le long de ce récipient fermé ou élément, des variations de masse en Hf par unité de longueur ou de surface utile inférieures à 2% relatif, ou même inférieures à 1% relatif.

Il est possible de faire varier les teneurs ou la densité de Hf le long de l'élément absorbeur lorsque cela est souhaité, par exemple par l'une des deux méthodes suivantes :
- en préparant des comprimés à partir de lots de produits différant par leurs teneurs en Hf, et en les entassant dans le récipient pour réaliser des teneurs en Hf variant de façon discrète le long de ce récipient fermé devenu l'élément ;
- en introduisant dans le récipient en une ou plusieurs séquences, une quantité de Hf et éventuellement d'alliage contenant du Hf augmentant de façon continue d'une extrémité à l'autre du récipient, ainsi que en même temps une quantité de métal ou alliage moins chargé en Hf allant en décroissant, et en les comprimant ensemble après chaque séquence d'introduction, ou à la fin avant de fermer l'extrémité du récipient. On obtient ainsi une variation continue de la teneur ou densité surfaceique en Hf le long de l'élément absorbeur.

Le récipient métallique et son couvercle sont en tout métal ou alliage suffisamment résistant à la corrosion dans le réacteur à 350°C environ. Un acier inoxydable, de préférence un austéno-ferritique à bas carbone ou stabilisé, par exemple un AISI 316L, est particulièrement approprié par sa résistance à la corrosion, son aptitude à la conformation en récipient et sa soudabilité. On peut ainsi se référer pour le choix du métal ou alliage du récipient au métal ou alliage de la structure du dispositif de contrôle, selon le mode de fixation envisagé pour l'élément absorbeur de l'invention.

On peut remarquer que, par suite de la nature du récipient et de son contenu, il est possible de modifier la forme du récipient rempli et fermé, devenu un élément absorbeur, par conformation modérée à froid ou à tiède à moins de 260°C, produisant par exemple un allongement de moins de 30%, ou une modification de largeur pour la fixation sur le dispositif de contrôle.

L'invention a pour deuxième objet l'élément métallique absorbeur de neutrons obtenu, qui est rempli d'un mélange de produits métalliques compactés tels que définis dans l'exposé de l'invention paragraphe a), mais comprenant de préférence au moins 25% de cristaux d' électrolyse en Hf dont les formes sont bien reconnaissables. La teneur locale en Hf peut varier par paliers le long de cet élément, ou encore de façon continue d'une extrémité à l'autre, typiquement d'au moins 10% relatif. En plus des cristaux et éventuellement des copeaux en Hf, et par exemple pour ajuster la masse de l'élément, cet élément peut contenir aussi au moins 20% de cristaux ou copeaux de Zr ou alliage et/ou de Ti ou alliage. Une partie des éléments Hf, Ti et/ou Zr peut être sous forme d'éponge.

### AVANTAGES DE L'INVENTION

Ils sont nombreux :
- utilisation préférée de Hf pur (cristaux d'électrolyse) sans transformation compliquée et coûteuse ;
- souplesse vis-à-vis des sources de métaux ou alliages ;
- ajustement facile de la masse de Hf ;
- possibilité de faire varier la teneur en Hf le long de l'élément ;
- possibilité de modifier la masse totale pour une masse en Hf contenu donnée ;
- simplicité du procédé de fabrication.

### EXEMPLES

Les exemples qui suivent permettent d'illustrer certains aspects de l'invention.

### Exemple 1 :

on utilise un tube en acier inoxydable (AISI 316L) d'épaisseur 0,8 mm, de longueur 1000 mm, fermé à son extrémité inférieure par un bouchon soudé de hauteur 10 mm. Ce tube est maintenu vertical pour le remplissage.
On introduit en 3 fois, suivies chacune d'une pressée au moyen d'une aiguille, à extrémité plane de diamètre 8,2 mm, 625g de cristaux d'électrolyse en Hf, le niveau final des cristaux comprimés se trouvant à environ 5,5 mm en-dessous de l'ouverture d'extrémité du récipient. Le bouchon de hauteur 10 mm est ensuite mis en place sans difficulté il reste alors un jeu moyen de 0,5 mm sous son fond. Le soudage du bouchon avec mise sous vide de l'intérieur est fait comme d'habitude en soudure latérale traversant l'extrémité du tube.

Dans cet exemple, le récipient fermé est rempli à 98% et la densité apparente de la couche de cristaux Hf comprimés est d'environ 85%.

### Exemple 2 :

on utilise un tube identique à celui de l'exemple 1, à l'exception de sa longueur qui est de 1400 mm.
On prépare 75 comprimés ou pastilles de diamètre 8,2 mm et de hauteur unitaire 20 mm, à partir de fractions égales d'un mélange de :
- cristaux d'électrolyse Hf : 207 g (37,5 %)
- copeaux de zircaloy 4 : 345 g
Dans cet état précomprimé, le volume apparent total des comprimés est de 79,2 cm³ et leur volume théorique total déduit des masses spécifiques est de 207/13,29+345/6,5=68,65 cm³.
La densité apparente des cristaux et copeaux comprimés est donc de 86,7%.
On introduit 40 comprimés dans le tube et on en effectue une première recompression, diminuant leur hauteur totale d'environ 10 mm par élargissement et par densification. On introduit les 35 autres comprimés dans le tube, et on reprend la recompression, avec une pression un peu plus forte, amenant la niveau supérieur du dernier "pellet" à environ 5,5 mm de l'extrémité ouverte du récipient.
Dans cet état, les "pellets" s'étant un peu élargis et s'étant écrasés, la densité apparente ou densité relative des cristaux et copeaux comprimés est de 88%.
La mise en place du bouchon et son soudage se font comme précédemment.

### Exemple 3

on utilise un tube identique à celui de l'exemple 2 et les mêmes natures et quantités de produits compactables, ceux-ci étant toutefois répartis de façon différente en 3 lots de même masse 184 g :
- 1er lot : cristaux Hf 60g (32,5%) - copeaux zircaloy 124 g
- 2ème lot : cristaux Hf 69g (37,5%) - copeaux zircaloy 115g
- 3ème lot : cristaux hf 78g (42,5%) - copeaux zircaloy 102g
On prépare à partir de fractions égales en masse de chacun des lots :
26 comprimés pour le 1er lot, 25 pour le 2ème lot et 24 pour le 3ème lot.

On introduit les 26 comprimés du 1er lot dans le tube et on effectue une première recompression.
On introduit ensuite les 25 comprimés du 2ème lot dans le tube et on effectue une nouvelle recompression, puis on introduit les 24 comprimés du 3ème lot et on effectue la recompression finale et la fermeture comme dans l'exemple 2.
On obtient ainsi un élément absorbeur de même masse de Hf que l'élément de cet exemple 2, mais avec trois portions de teneurs en Hf différentes.

## Revendications

1. Procédé de fabrication d'un élément métallique absorbeur de neutrons pour utilisation dans un dispositif de contrôle d'un réacteur nucléaire, ledit élément comprenant du hafnium et étant revêtu d'un gainage peu ou pas absorbant pour lesdits neutrons, caractérisé en ce qu'il comprend les opérations suivantes :
a) on prépare des produits métalliques compactables comprenant (% en masse ) :
. Hf : au moins 25%
. Zr et/ou alliages de Zr : 0 à 75%
. Ti et/ou alliages de Ti : 0 à 75%
. alliages Hf-Zr de teneur en Zr < 55% : 0 à 75%
. alliages Hf-Ti de teneur en Ti < 55% : 0 à 75%
. éléments métalliques absorbants pour les neutrons et fondant à plus de 400°C : < 0,2%
. autres éléments métalliques fondant à plus de 400°C, 0 à le solde, ce solde étant inférieur à 5% ;
b) on introduit une partie au moins de ces produits dans un récipient métallique ayant une extrémité ouverte ;
c) on comprime lesdits produits dans ce récipient, ou on les a comprimés avant leur introduction dans le récipient ;
d) on répète si nécessaire les introductions et compressions desdits produits jusqu'à remplir le récipient fermé à au moins 95% ;
e) on ferme l'extrémité ouverte du récipient par soudage d'un couvercle ou d'un bouchon métallique en assurant un vide intérieur d'air meilleur que 1,3Pa.

2. Procédé selon la revendication 1, dans lequel le hafnium utilisé comprend des cristaux d'électrolyse représentant au moins 25% de la masse totale des produits, ces cristaux ayant des teneurs en H et Cl respectivement inférieures à 40ppm et à 50ppm.

3. Procédé selon l'une quelconque des revendications 1 ou 2, dans lequel les produits utilisés comprennent des cristaux d'électrolyse en Zr et/ou en Ti, ayant des teneurs en H et en Cl respectivement inférieures à 40ppm et à 50ppm.

4. Procédé selon la revendication 2 ou la revendication 3, dans lequel les cristaux d'électrolyse utilisés ont des teneurs moyennes en H et Cl respectivement inférieures à 25 et 30 ppm.

5. Procédé selon la revendication 4, dans lequel on a traité préalablement les cristaux d'électrolyse utilisés entre 150 et 300°C sous vide ou sous gaz inerte.

6. Procédé selon la revendication 3, dans lequel on a préalablement traité les cristaux d'électrolyse utilisés 8h à 48h entre 1000 et 1250°C, et de préférence 16h à 32h entre 1050 et 1150°C.

7. Procédé selon l'une quelconque des revendications 1 à 6, dans lequel on mélange les produits compactables avant de les comprimer et/ou introduire dans ledit récipient métallique, de façon à obtenir le long de ce récipient fermé ou élément des variations de masse en Hf par unité de longueur ou de surface utile inférieures à 2% relatif.

8. Procédé selon l'une quelconque des revendications 1 à 6, dans lequel on réalise des teneurs en Hf variant de façon discrète le long dudit récipient fermé ou élément en préparant des comprimés à partir de lots de produits compactables ayant des teneurs en Hf différentes avant de les introduire dans le récipient.

9. Procédé selon l'une quelconque des revendications 1 à 6, dans lequel on réalise une variation continue de la densité en Hf le long d'un récipient, en y introduisant en une ou plusieurs séquences, une quantité de Hf et/ou d'alliage contenant du Hf augmentant de façon continue d'une extrémité à l'autre du récipient, en même temps qu'une quantité de métal ou alliage non chargé ou moins chargé en Hf allant alors en décroissant, et en les comprimant après chaque séquence d'introduction ou à la fin avant de fermer l'extrémité du récipient.

10. Procédé selon l'une quelconque des revendications précédentes, dans lesquelles le récipient métallique et son couvercle sont en acier inoxydable, par exemple en AISI 316L.

11. Procédé selon l'une quelconque des revendications précédentes, dans lequel l'élément ou récipient rempli est allongé ou conformé par conformation à froid ou à moins de 260°C.

12. Elément métallique absorbeur de neutrons rempli d'un mélange de produits métalliques compactés contenant en masse au moins 25% de Hf et
Zr et/ou alliages de Zr : 0 à 75%
Ti et/ou alliages de Ti : 0 à 75%
alliages Hf-Zr de teneur en Zr < 55% : 0 à 75%
alliages Hf-Ti de teneur en Ti < 55% : 0 à 75%
éléments métalliques absorbants pour les neutrons et fondant à plus de 400°C: < 0,2 %
autres éléments métalliques fondant à plus de 400°C, 0 à le solde, ce solde étant inférieur à 5%.

13. Elément selon la revendication 12, contenant au moins 25% de cristaux d'électrolyse en Hf.

14. Elément selon l'une quelconque des revendications 12 ou 13, dont la teneur locale en Hf varie par paliers.

15. Elément selon l'une quelconque des revendications 12 ou 13, dont la teneur en Hf varie de façon continue d'une extrémité à l'autre, d'au moins 10% relatif.

16. Elément selon l'une quelconque des revendications 12 à 15 contenant en outre au moins 20% de cristaux ou copeaux de Zr ou alliage et/ou de Ti ou alliage.

## Claims

1. A method of making a metal, neutron absorbing element for use in a control arrangement of a nuclear reactor, the element comprising hafnium and being covered with a cladding which is hardly absorbent or non-absorbent to said neutrons, characterised in that it comprises the following operations:
a) preparing compactable metal products comprising (weight %):
. Hf - at least 25%
. Zr and/or Zr alloys = 0 to 75%
. Ti and/or Ti alloys = 0 to 75%
. Hf-Zr alloys containing < 55% Zr = 0 to 75%
. Hf-Ti alloys containing < 55% Ti = 0 to 75%
. neutron absorbing metal elements melting at over 400°C: < 0.2% and
. other metal elements melting at over 400°C: 0 to the balance, the balance being less than 5%;
b) introducing at least some of these products into a metal container with an open end;
c) compressing said products in the container, or compressing them before putting them into the container;
d) if necessary repeating the introduction and compression of the products until the container is at least 95% full;
e) closing the open end of the container by welding on a metal lid or plug and providing an internal air vacuum better than 1.3 Pa.

2. The method of Claim 1, wherein the hafnium used comprises electrolytic crystals representing at least 25% of the total weight of products, the crystals having a hydrogen and a chlorine content respectively less than 40 ppm and 50 ppm.

3. The method of Claim 1 or 2, wherein the products used comprise electrolytic crystals of Zr and/or Ti, with a hydrogen and a chlorine content respectively less than 40 ppm and 50 ppm.

4. The method of Claim 2 or 3, wherein the electrolytic crystals used have a mean hydrogen and chlorine content respectively less than 25 and 30 ppm.

5. The method of Claim 4, wherein the electrolytic crystals used have been treated previously at from 150 to 300°C, under vacuum or in an inert gas.

6. The method of Claim 3, wherein the electrolytic crystals used have been treated previously, for 8 to 48 hours at from 1000 to 1250°C and preferably for 16 to 32 hours at from 1050 to 1150°C.

7. The method of any of Claims 1 to 6, wherein the compactable products are mixed before being compressed and/or placed in the metal container, so that the variations in the weight of Hf per unit length or per unit useful surface area obtained along the sealed container or element are less than 2 relative percent.

8. The method of any of Claims 1 to 6, wherein discrete variations in the Hf content along the sealed container or element are produced, by preparing pellets from batches of compactable products with a different Hf content before placing them in the container.

9. The method of any of Claims 1 to 6, wherein continuous variation of the Hf density along a container is produced, by inserting Hf and/or alloy containing Hf in the container in one or more stages, in quantities increasing continuously from one end of the container to the other, while simultaneously inserting a decreasing quantity of metal or alloy containing no Hf or less Hf, and by compressing them after each inserting sequence or at the end of the operation before sealing the end of the container.

10. The method of any of the preceding claims, wherein the metal container and its lid are made of stainless steel, e.g. AISI 316L.

11. The method of any of the preceding claims, wherein the element or filled container is expanded or shaped by cold forming or forming at below 260°C.

12. A metal, neutron absorbing element filled with a mixture of compactable metal products comprising (weight %) at least 25% of Hf and :
. Zr and/or Zr alloys = 0 to 75%
. Ti and/or Ti alloys = 0 to 75%
. Hf-Zr alloys containing < 55% Zr = 0 to 75%
. Hf-Ti alloys containing < 55% Ti = 0 to 75%
. neutron absorbing metal elements melting at over 400°C : < 0.2%
. other metal elements melting at over 400°C : 0 to the balance, the balance being less than 5%.

13. The element of Claim 12, containing at least 25% of electrolytic Hf crystals.

14. The element of Claim 12 or 13, wherein the local Hf content varies in steps.

15. The element of Claim 12 or 13, wherein the Hf content varies continuously from one end to the other, by at least 10 relative percent.

16. The element of any of Claims 12 to 15, further containing at least 20% of crystals or chips of Zr or alloy and/or Ti or alloy.

## Patentansprüche

1. Verfahren zur Erzeugung eines metallischen Neutronenabsorberelements zur Verwendung in einer Steuervorrichtung eines Kernreaktors, wobei das Element Hafnium enthält und mit einer die Neutronen wenig oder nicht absorbierenden Umhüllung versehen ist,
gekennzeichnet durch folgende Schritte:
a) Vorbereiten kompaktierbarer metallischer Stoffe mit Gehalt an (Angaben in Gew.-%):
. Hafnium: mindestens 25 %
. Zirkon und/oder Zirkonlegierungen: 0 bis 75 %
. Titan und/oder Titanlegierungen: 0 bis 75 %
. Hafnium-Zirkonlegierungen mit Zirkongehalt <55 %: 0 bis 75 %
. Hafnium-Titanlegierungen mit Titangehalt < 55 %: 0 bis 75 %
. neutronenabsorbierende metallische Elemente mit einem Schmelzpunkt über 400 °C: < 0,2 %
. andere metallische Elemente mit einem Schmelzpunkt über 400 °C: 0 bis zum Rest, wobei der Rest unter 5 % beträgt;
b) Einbringen wenigstens eines Teils dieser Stoffe in einen metallischen Behälter mit einem offenen Ende;
c) Komprimieren der Stoffe in diesem Behälter oder Komprimieren der Stoffe vor ihrer Einbringung in den Behälter;
d) wenn nötig, Wiederholen der Einbringung und Kompression der Stoffe, bis der geschlossene Behälter zu mindestens 95 % gefüllt ist;
e) Verschließen des offenen Endes des Behälters durch Anschweißen eines metallischen Deckels oder Stopfens unter Sicherstellung eines Innenvakuums von besser als 1,3 Pa.

2. Verfahren nach Anspruch 1, dadurch gekennzeichnet, daß das verwendete Hafnium Elektrolysekristalle umfaßt, die mindestens 25 % der Gesamtmasse der Stoffe ausmachen, wobei diese Kristalle Wasserstoff- bzw. Chlorgehalte von weniger als 40 ppm bzw. 50 ppm haben.

3. Verfahren nach einem der Ansprüche 1 oder 2, dadurch gekennzeichnet, daß die verwendeten Stoffe Elektrolysekristalle aus Zirkon und/oder Titan umfassen, die Wasserstoff- bzw. Chlorgehalte von weniger als 40 ppm bzw. 50 ppm haben.

4. Verfahren nach Anspruch 2 oder 3, dadurch gekennzeichnet, daß die verwendeten Elektrolysekristalle mittlere Wasserstoff- bzw. Chlorgehalte von weniger als 25 bzw. 30 ppm haben.

5. Verfahren nach Anspruch 4, dadurch gekennzeichnet, daß die verwendeten Elektrolysekristalle vorab zwischen 150 und 300 °C unter Vakuum oder Schutzgas behandelt worden sind.

6. Verfahren nach Anspruch 3, dadurch gekennzeichnet, daß die verwendeten Elektrolysekristalle vorab 8 bis 48 h lang zwischen 1000 und 1250 °C und vorzugsweise 16 bis 32 h lang zwischen 1050 und 1150 °C behandelt worden sind.

7. Verfahren nach einem der Ansprüche 1 bis 6, dadurch gekennzeichnet, daß die kompaktierbaren Stoffe vor dem Komprimieren und/oder Einbringen in den metallischen Behälter vermischt werden, so daß entlang dieses geschlossenen Behälters oder Elements Schwankungen der Hafniummasse pro Längeneinheit oder pro Nutzoberflächeneinheit von relativ kleiner als 2 % erhalten werden.

8. Verfahren nach einem der Ansprüche 1 bis 6, dadurch gekennzeichnet, daß entlang des geschlossenen Behälters oder Elements diskret veränderliche Hafniumgehalte hergestellt werden, indem aus Chargen kompaktierbarer Stoffe mit unterschiedlichen Hafniumgehalten vor ihrer Einbringung in den Behälter Preßkörper hergestellt werden.

9. Verfahren nach einem der Ansprüche 1 bis 6, dadurch gekennzeichnet, daß entlang eines Behälters eine kontinuierliche Änderung der Hafniumdichte hergestellt wird. indem in einer oder mehreren Folgen eine Menge von Hafnium und/oder hafniumhaltiger Legierung, die kontinuierlich von einem Ende des Behälters zum anderen zunimmt, zusammen mit einer demzufolge abnehmenden Menge von Metall, nicht oder weniger hafniumhaltiger Legierung eingeführt wird, und daß diese nach jeder Einführungsfolge oder am Ende vor dem Verschließen des Endes des Behälters komprimiert werden.

10. Verfahren nach einem der vorhergehenden Ansprüche, dadurch gekennzeichnet, daß der Metallbehälter und sein Deckel aus rostfreiem Stahl, z.B. aus AISI 316L bestehen.

11. Verfahren nach einem der vorhergehenden Ansprüche, dadurch gekennzeichnet, daß das gefüllte Element oder der gefüllte Behälter kalt oder bei weniger als 260 °C verformt oder langgezogen wird.

12. Metallisches Neutronenabsorberelement, gefüllt mit einer Mischung aus kompaktierten metallischen Stoffen mit einem Gehalt in Gew.-% an
Hafnium: mindestens 25 %,
Zirkon und/oder Zirkonlegierungen: 0 bis 75 %,
Titan und/oder Titanlegierungen: 0 bis 75 %,
Hafnium-Zirkonlegierungen mit Zirkongehalt < 55 %: 0 bis 75 %,
Hafnium-Titanlegierungen mit Titangehalt <55 %: 0 bis 75 %,
neutronenabsorbierende metallische Elemente mit einem Schmelzpunkt über 400 °C: <0,2 %,
andere metallische Elemente mit einem Schmelzpunkt über 400 °C: 0 bis zum Rest, wobei der Rest kleiner als 5 % ist.

13. Element nach Anspruch 12, gekennzeichnet durch einen Gehalt von mindestens 25 % an Hafnium-Elektrolysekristallen.

14. Element nach einem der Ansprüche 12 oder 13, dessen lokaler Hafniumgehalt sich stufenweise ändert.

15. Element nach einem der Ansprüche 12 oder 13, dessen Hafniumgehalt sich von einem Ende zum anderen kontinuierlich um mindestens 10 % relativ ändert.

16. Element nach einem der Ansprüche 12 bis 15, gekennzeichnet durch einen Gehalt von mindestens 20 % an Kristallen oder Spänen aus Zirkon oder Zirkonlegierungen und/oder Titan oder Titanlegierungen.
